# EUROPÄISCHE PATENTSCHRIFT

(11) **EP 2 524 668 B1**
(45) Veröffentlichungstag und Bekanntmachung des Hinweises auf die Patenterteilung: **05.06.2019**
(21) Anmeldenummer: 12155804.3
(22) Anmeldetag: 16.02.2012
(51) Int. Cl.: A61C 1/00, A61C 1/06, A61C 19/00, A61C 1/12

(54) **Verfahren zum Betreiben eines medizinischen Handgeräts**
Method for operating a handheld medical device
PROCÉDÉ DE FONCTIONNEMENT d'un appareil médical portatif

(30) Priorität: 19.05.2011 DE 102011076124
(43) Veröffentlichungstag der Anmeldung: 21.11.2012
(73) Patentinhaber: Kaltenbach & Voigt GmbH, 88400 Biberach (DE)
(72) Erfinder: Kuhn, Bernhard, 88400 Biberach (DE); Gugel, Bernd, 89079 Ulm (DE); Braun, Thomas, 88400 Biberach (DE)
(74) Vertreter: Thun, Clemens

(56) Entgegenhaltungen:
- EP-A1- 1 970 020
- EP-A2- 0 732 083
- AT-A1- 500 520
- DE-A1- 4 323 815
- US-A- 2 442 033
- US-A- 6 146 137
- US-A1- 2009 004 622
- US-A1- 2010 151 406
- US-B1- 6 368 556

## Beschreibung

Die Erfindung betrifft ein Verfahren zum Betreiben eines medizinischen, insbesondere zahnmedizinischen Handgeräts, welches eine längliche Griffhülse aufweist, in der zu einer Antriebsanordnung gehörende, insbesondere drehbar gelagerte Elemente angeordnet sind.

Es ist bekannt, zur Reinigung und Pflege eines entsprechenden zehnmedizinischen Handgeräts in Form eines Winkelstücks in einem ersten Schritt die drehbar gelagerten Elemente der Antriebsanordnung mit einem Reinigungsmittel bzw. -fluid zu reinigen und in einem anschließenden, zweiten Schritt mit einem Öl zu schmieren bzw. zu ölen. Dabei werden das Reinigungsmittel und das Öl durch Hohlraumbereiche des Winkelstücks geleitet, die sich unmittelbar um drehbar gelagerte Elemente der Antriebsanordnung herum erstrecken. Das Winkelstück umfasst außer diesen Hohlraumbereichen, die von dem Reinigungsmittel und dem Öl durchströmt werden, noch weitere Hohlraumbereiche, die über Fügespalten mit dem Außenraum des Winkelstücks verbunden sind. Diese weiteren Hohlraumbereiche sind durch eine Lichtmittelführung, eine Kühlmittelführung und Kanäle für Sensor- und Energieleitungen miteinander verbunden und dabei beinahe hermetisch von den zuerst genannten, von dem Reinigungsmittel und dem Öl durchströmten Hohlraumbereichen abgeschirmt bzw. getrennt. Bei dem bekannten Verfahren zum Reinigen und Pflegen werden die weiteren Hohlraumbereiche somit nicht behandelt. Es besteht daher das Risiko, dass Krankheitserreger, beispielsweise Viren, die im Rahmen einer zahnärztlichen Anwendung des Winkelstücks in die weiteren Hohlraumbereiche eingedrungen sind, durch die Reinigung und Pflege nicht vom Winkelstück entfernt werden und in der Folge eine Ansteckungsgefahr für Anwender und Patienten entstehen lassen.

Aus der US 2009/0004622 A1 ist ein zahnmedizinisches Handstück mit einem Elektromotor bekannt, bei dem zwischen dem Stator und dem Rotor Kühlluft geführt wird; dabei kann ein Teil der Luft über den Stator außen zurückgeführt werden.

Aus der EP 1 970 020 A1 ist ein mit einem Elektromotor betreibbares Laborhandstück bekannt. Ein vom Laborhandstück abgebbarer Druckgasstrom verhindert das Eindringen von Staubpartikel in das Innere des Laborhandstücks.

Der Erfindung liegt die Aufgabe zugrunde, während der Benutzung eines entsprechenden Handgeräts einer innere Verkeimung bzw. Verschmutzung des Handgeräts zu vermeiden oder zumindest zu verringern.

Diese Aufgabe wird gemäß der Erfindung mit dem Verfahren gemäß Anspruch 1 gelöst. Besondere Ausführungsarten der Erfindung sind in den abhängigen Ansprüchen angegeben.

Gemäß der Erfindung ist ein Verfahren vorgesehen zum Betreiben eines medizinischen, insbesondere zahnmedizinischen Handgeräts, welches eine längliche Griffhülse aufweist, in der zu einer Antriebsanordnung gehörende, insbesondere drehbar gelagerte Elemente angeordnet sind. Dabei wird ein gasförmiges, steriles Medium durch einen Überdruck angetrieben durch einen die Elemente der Antriebsanordnung umschließenden Kraftübertragungsbereich geleitet. Zusätzlich wird das Medium auch durch weitere Hohlraumbereiche des Handgeräts geleitet, die über wenigstens einen Fügespalt mit dem Außenraum des Handgeräts verbunden sind.

Hierdurch lässt sich ein Eindringen von Keimen und/oder Schmutz in das Handgerät verhindern oder zumindest vermindern.

Vorzugsweise ist das Medium antiseptisch. Hierdurch lässt sich eine besonders deutliche Reduzierung von Keimen erzielen.

Vorteilhaft wird vorab ein unterer und/oder oberer Grenzwert für den Überdruck festgelegt. Hierdurch lässt sich ein besonders gutes Verhältnis zwischen dem Aufwand zur Erzeugung des Überdrucks und dem Effekt zur Keimreduzierung erreichen. Der untere Grenzwert beträgt vorzugsweise zwischen 1 hPa und 10 hPa, beispielsweise 5 hPa.

Die Erfindung wird im Folgenden anhand eines Ausführungsbeispiels und mit Bezug auf die Zeichnungen näher erläutert. Es zeigen:
- Fig. 1: einen Querschnitt durch ein dentales Winkelstück, aufgesteckt auf ein zapfenförmiges Kupplungselement eines (nur teilweise gezeigten) Motorelements,
- Fig. 2: einen Ausschnitt aus einem Querschnitt eines weiteren dentalen, auf ein Motorelement aufgesetzten Winkelstücks,
- Fig. 3: einen der Fig. 2 entsprechenden Querschnitt, wobei das Winkelstück z. B. auf eine Schmiermittel-Spraydose aufgesetzt ist,
- Fig. 4: einen der Fig. 2 entsprechenden Querschnitt, wobei das Winkelstück z. B. auf einen Anschlussbereich eines Pflegeautomaten aufgesetzt ist,
- Fig. 5: einen der Fig. 2 entsprechenden Querschnitt, wobei das Winkelstück z. B. auf eine Reinigungsfluid-Spraydose aufgesetzt ist und
- Fig. 6: eine Skizze, wobei ein gasförmiges, vorzugsweise steriles, beispielsweise gasförmig steriles oder gasförmig reines oder gasförmig antiseptisches Medium durch das Handgerät geleitet wird.

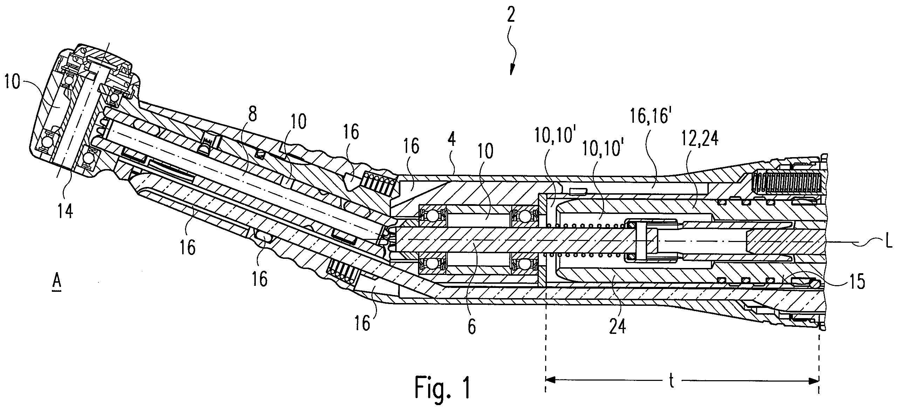

Zur Erläuterung der Erfindung ist zunächst in Fig. 1 ein Handgerät 2 exemplarisch in Form eines dentalen Winkelstücks im Querschnitt skizziert gezeigt. Das Handgerät 2 weist eine längliche Griffhülse 4 auf.

Wie im gezeigten Beispiel der Fall, kann das Handgerät 2 zum Antrieb eines (in Fig. 1 nicht skizzierten) rotierenden Werkzeugs vorgesehen sein, beispielsweise eines Bohrers. Hierzu kann das Handgerät 2 eine Werkzeugaustrittsöffnung 14 bzw. eine Bohreraustrittsöffnung aufweisen.

Zum Antrieb des Werkzeugs kann insbesondere vorgesehen sein, dass das Handgerät 2 mit einem Motorelement 12, beispielsweise einem Elektromotorelement, in Antriebsverbindung gebracht wird, insbesondere durch ein Aufstecken des Handgeräts 2 auf eine Kupplung des Motorelements 12. In Fig. 1 ist lediglich ein vorderer Bereich des Motorelements 12 skizziert; bei diesem kann es sich um ein zapfenförmiges Kupplungselement 24 handeln, das beispielsweise einen etwa ringzylindrischen Wandbereich aufweist. Das Handgerät 2 kann eine rückwärtige bzw. am der Werkzeugaustrittsöffnung 14 gegenüberliegenden Endbereich des Handgeräts 2 ausgebildete Vertiefung in Form einer Kupplungsaufnahme 15 aufweisen, die dementsprechend zur Aufnahme des Kupplungselements 24 des Motorelements 12 ausgebildet ist.

In der Griffhülse 4 sind zu einer Antriebsanordnung gehörende Elemente angeordnet, insbesondere drehbar gelagerte Elemente, beispielsweise eine Welle 6 und eine weitere Welle 8. Die drehbar gelagerten Elemente können insbesondere zu einer Kraftübertragung von dem Motorelement 12 zu dem Werkzeug ausgebildet sein.

Durch die - zumindest in einem der Werkzeugaustrittsöffnung 14 gegenüberliegenden bzw. "rückwärtigen" Bereich des Handgeräts 2 - längliche Form der Griffhülse 4 lässt sich eine Längsachse *L* des Handgeräts 2 festlegen. Die Kupplungsaufnahme 15 kann - wie in den Figuren exemplarisch gezeigt - sich parallel zu dieser Längsachse *L* bzw. sich um die Längsachse *L* herum erstreckend ausgebildet sein. Wie gezeigt, kann die Kupplungsaufnahme 15 mit Bezug auf die Längsachse *L* eine Tiefe *t* aufweisen.

Das Handgerät 2 weist einen, die Elemente der Antriebsanordnung umschließenden Kraftübertragungsbereich 10 auf. Hierbei kann es sich insbesondere um einen Hohlraumbereich handeln, der sich unmittelbar um wenigstens ein drehbar gelagertes Element der Antriebsanordnung, also beispielsweise um die Welle 6 und/oder um die weitere Welle 8, herum erstreckt. In Fig. 1 sind mehrere Anteile des Kraftübertragungsbereichs 10 mit dem Bezugszeichen 10 bezeichnet. Wie im gezeigten Beispiel der Fall, kann sich der Kraftübertragungsbereich von der Kupplungsaufnahme 15 durchgehend bis zur Werkzeugaustrittsöffnung 14 erstrecken.

Wie im gezeigten Beispiel der Fall, kann sich eines der drehbar gelagerten Elemente, hier die Welle 6, in die Kupplungsaufnahme 15 hinein erstrecken, so dass sich der Kraftübertragungsbereich 10 teilweise in dem von der Kupplungsaufnahme 15 umschriebenen Bereich erstreckt. In Fig. 1 ist dieser Teil des Kraftübertragungsbereichs 10 zusätzlich mit dem Bezugszeichen 10' bezeichnet.

Üblicherweise wird in einem Normalbetrieb des Handgeräts 2 von dem Motorelement 12 ausgehende Kühlluft oder Sperrluft bis zu der Werkzeugaustrittsöffnung 14 des Handgeräts 2 geleitet, und zwar derart, dass hierdurch ein Überdruck im Kraftübertragungsbereich 10 erzeugt wird. Auf diese Weise soll während der Arbeit ein Eindringen von Schmutz bzw. Keimen in den Kraftübertragungsbereich 10 verhindert werden.

Aus dem Stand der Technik ist es insoweit bekannt, zum Reinigen und Pflegen des Handgeräts 2 unterschiedliche Medien durch dieses zu leiten. Dabei wird durch den Kraftübertragungsbereich 10 in einem ersten Schritt eine Reinigungsflüssigkeit geleitet und in einem darauffolgenden Schritt ein Öl oder eine Öldispersion.

Weiterhin weist das Handgerät 2 einen weiteren Hohlraum 16 auf. Bei diesem kann es sich um weitere Hohlraumbereiche des Handgeräts 2 handeln, die über wenigstens einen Fügespalt mit dem Außenraum *A* des Handgeräts 2 verbunden sind und dabei beispielsweise durch eine Lichtmittelführung und/oder eine Kühlmittelführung und/oder wenigstens einen Kanal für Sensor- und/oder Energieleitungen miteinander verbunden sind. Bei dem weiteren Hohlraum 16 kann es sich insbesondere um einen weiteren Hohlraumbereich handeln, der nicht unmittelbar an ein Element, insbesondere an ein drehbar gelagertes Element der Antriebsanordnung angrenzt. Bei dem weiteren Hohlraum 16 kann es sich um einen Todraum handeln.

Wie im gezeigten Beispiel der Fall, kann der weitere Hohlraum 16 einen in Fig. 1 zusätzlich mit 16' bezeichneten Teil umfassen, der sich mit Bezug auf die Längsachse L radial außerhalb der Kupplungsaufnahme 15 erstreckt.

Gemäß dem Stand der Technik ist eine Reinigung des weiteren Hohlraums 16 nicht vorgesehen, so dass es dazu kommen kann, dass im Rahmen einer Behandlungsanwendung des Handgeräts 2 Schmutz bzw. Keime durch den wenigstens einen Fügespalt in den weiteren Hohlraum 16 eindringen und bei einer folgenden Reinigung und Pflege nicht erfasst werden, also in dem weiteren Hohlraum 16 verbleiben. Hierdurch ist eine potenzielle Ansteckungsgefahr gebildet, sowohl für einen Anwender des Handgeräts 2, als auch für einen Patienten, der mit dem Handgerät 2 behandelt wird.

Es ist vorgesehen, dass zum Reinigen und zum Pflegen ein erstes Medium, insbesondere ein Mittel zum Schmieren der Elemente der Antriebsanordnung, beispielsweise ein Öl oder eine Öldispersion, lediglich durch den Kraftübertragungsbereich 10 geleitet wird, also insbesondere nicht durch den weiteren Hohlraum 16. Ein zweites Medium hingegen, insbesondere ein Reinigungsmittel, wird zusätzlich auch durch den mindestens einen weiteren Hohlraum 16 innerhalb des Handgeräts 2 geleitet. Hierdurch ist eine Reinigung des weiteren Hohlraums 16 ermöglicht.

Insbesondere kann dementsprechend vorgesehen sein, dass in einem ersten Schritt zum Reinigen des Handgeräts 2 das zweite Medium (insbesondere Reinigungsmittel) sowohl durch den Kraftübertragungsbereich 10, als auch durch den weiteren Hohlraum 16 geleitet wird und in einem darauffolgenden, insbesondere anschließenden Schritt das erste Medium (insbesondere Öl oder Öldispersion) lediglich durch den Kraftübertragungsbereich 12 geleitet wird, also insbesondere nicht durch den weiteren Hohlraum 16. Auf diese Weise lässt sich vermeiden, dass das erste Medium in der Folge durch den wenigstens einen Fügespalt austritt und hierdurch die Oberfläche des Handgeräts 2 benetzt bzw. verölt.

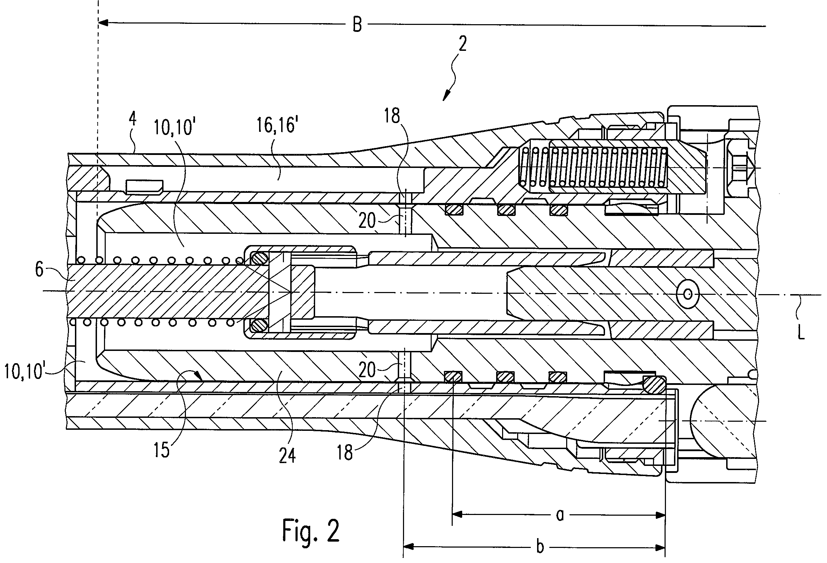

Vorteilhaft steht der Kraftübertragungsbereich 10 mit dem weiteren Hohlraum 16 in Verbindung. In Fig. 2 ist eine derartige Verbindung exemplarisch gezeigt. Hierzu kann das Handgerät 2 wenigstens einen Verbindungskanal 18 aufweisen, der vorzugsweise so ausgebildet ist, dass er die Kupplungsaufnahme 15 derart mit dem weiteren Hohlraum 16 verbindet, dass das zweite Medium (Reinigungsmittel) diesen Verbindungskanal 18 durströmend in den weiteren Hohlraum 16 eindringen kann. Die Verbindung kann also durch den wenigstens einen Verbindungskanal 18 gebildet sein. Im gezeigten Beispiel ist der Verbindungskanal 18 mit Bezug auf die Längsachse *L* in einer Tiefe *b* der Kupplungsaufnahme 15 radial nach außen verlaufend ausgebildet und mündet in den zusätzlich mit dem Bezugszeichen 16' bezeichneten Teil des weiteren Hohlraums 16. Hierdurch ist es möglich, den Verbindungskanal 18 besonders kurz auszubilden. In einer Tiefe *a* der Kupplungsaufnahme 15, die kleiner ist als die Tiefe *b,* ist im gezeigten Beispiel die vordere Abdichtung einer Kühlluftführung ausgebildet.

(Bei dem in Fig. 1 skizzierten Handgerät 2 ist der Verbindungskanal 18 nicht skizziert.)

Vorzugsweise ist das Handgerät 2 derart ausgebildet, dass der wenigstens eine Verbindungskanal 18 die einzig mögliche Übergangsstelle bildet, an der das zweite Medium (Reinigungsmittel) von dem Kraftübertragungsbereich 10 kommend in den weiteren Hohlraum 16 eindringen kann. Abgesehen von dem wenigstens einen Verbindungskanal 18 ist also vorteilhaft der weitere Hohlraum 16 zumindest praktisch bzw. beinahe hermetisch von dem Kraftübertragungsbereich 10 abgeschirmt bzw. getrennt ausgebildet.

Der wenigstens eine Verbindungskanal 18 ist dabei vorteilhaft mit Bezug auf die Längsachse *L* des Handgeräts 2 innerhalb desjenigen Bereichs *B* ausgebildet, über den sich die Kupplung des Motorelements 12 bzw. das zapfenförmige Kupplungselement 24 erstreckt, wenn das Handgerät 2, wie zur Antriebsverbindung vorgesehen, auf das Motorelement 12 bzw. dessen Kupplung aufgesteckt ist.

Um einen Durchtritt bzw. Durchfluss des zweiten Mediums (Reinigungsmittel) von dem Kraftübertragungsbereich 10 zu dem weiteren Hohlraum 16 bei aufgestecktem Motorelement 12 zu ermöglichen, kann in dem Motorelement 12, insbesondere in dem zapfenförmigen Kupplungselement 24 bzw. in dessen ringzylindrischen Wandbereich, wenigstens eine Öffnung 20 vorgesehen sein, die derart ausgebildet ist, dass das zweite Medium (Reinigungsmittel) von der wenigstens einen Öffnung 20 in den wenigstens einen Verbindungskanal 18 und in der Folge in den weiteren Hohlraum 16 einströmen kann, wenn das Handgerät 2 wie vorgesehen auf dem Motorelement 12 bzw. dessen Kupplungselement 24 aufgesteckt ist.

Durch die beschriebene Verbindung und das Motorelement 12 mit der wenigstens einen Öffnung 20 ist ermöglicht, dass in einem Normalbetrieb des Handgeräts 2 von dem Motorelement 12 ausgehende Kühlluft oder Sperrluft auch den weiteren Hohlraum 16 durchsetzt und somit einem Eindringen von Schmutz bzw. Keimen in den weiteren Hohlraum 16 entgegenwirkt.

Zum Pflegen des Handgeräts 2 wird vorzugsweise die genannte Verbindung beim Durchleiten des ersten Mediums (Öl, Öldispersion) überbrückt bzw. geschlossen gehalten. Auf diese Weise lässt sich besonders einfach vermeiden, dass das erste Medium (Öl, Öldispersion) in den weiteren Hohlraum 16 eintritt und in der Folge durch den wenigstens einen Fügespalt auf eine Außenfläche des Handgeräts 2 gelangt.

Hierzu kann vorteilhaft vorgesehen sein, dass die Medien verschiedenen Vorratsbehältern entnommen werden, wobei Anschlussbereiche der Vorratsbehälter, über welche das entsprechende Medium in das Handgerät 2 geleitet wird, unterschiedlich ausgestaltet sind.

Insbesondere kann vorgesehen sein, dass zum Pflegen ein erster Vorratsbehälter verwendet wird, der das erste Medium (Öl, Öldispersion) enthält und der einen ersten Anschlussbereich aufweist, der dazu ausgebildet ist, derart in die Kupplungsaufnahme 15 des Handgeräts 5 eingesteckt zu werden, dass er die Verbindung bzw. den Verbindungskanal 18 verschließt und dabei ein Ausströmen des ersten Mediums in den Kraftübertragungsbereich 10 ermöglicht. Zum Reinigen kann vorgesehen sein, dass ein zweiter Vorratsbehälter verwendet wird, der das zweite Medium (Reinigungsmittel) enthält und der einen zweiten Anschlussbereich aufweist, der dazu ausgebildet ist, derart in die Kupplungsaufnahme 15 des Handgeräts 5 eingesteckt zu werden, dass er die Verbindung bzw. den Verbindungskanal 18' nicht verschließt und dabei ein Ausströmen des zweiten Mediums sowohl in den Kraftübertragungsbereich 12, als auch in den weiteren Hohlraum 16 ermöglicht.

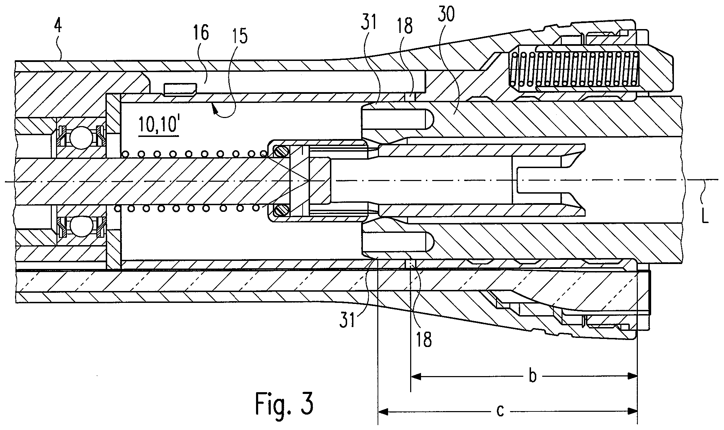

In Fig. 3 ist exemplarisch ein solcher erster Anschlussbereich 30 eines ersten Vorratsbehälters in Form einer (nicht insgesamt gezeigten) Spraydose skizziert. Der erste Anschlussbereich 30 weist vorzugsweise - im aufgesteckten Zustand - mit Bezug auf die Längsachse *L* in einer Tiefe *c* der Kupplungsaufnahme 15 eine Abdichtung 31, beispielsweise in Form eines Dosennippels auf, durch den ein Verschluss der Verbindung bzw. des Verbindungskanals 18 gewährleistet ist. Die Tiefe *c* ist dabei größer als die oben genannte Tiefe *b,* in der sich der Verbindungskanal 18 befindet, wodurch ein besonders einfacher und sicherer Verschluss der Verbindung durch den ersten Anschlussbereich 30 ermöglicht ist.

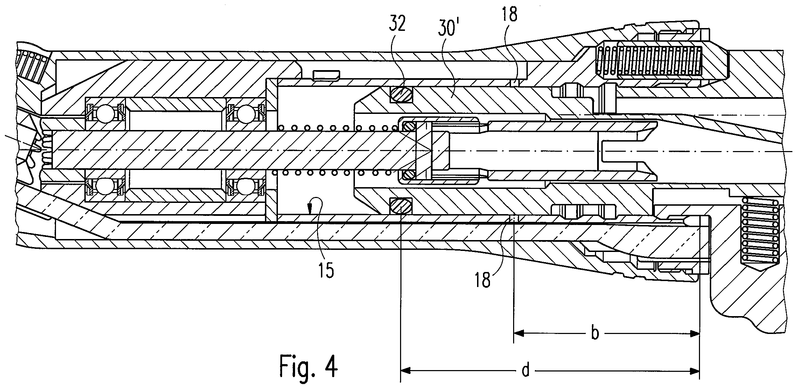

In Fig. 4 ist ein weiteres Beispiel eines ersten Anschlussbereichs 30' skizziert, der in einer Tiefe *d* eine Abdichtung 32 in Form einer Ringdichtung gegenüber der Kupplungsaufnahme 15 bzw. deren Innenwandung aufweist, wobei die Tiefe *d* entsprechend den obigen Ausführungen wiederum größer ist als die Tiefe *b,* in der sich der Verbindungskanal 18 befindet.

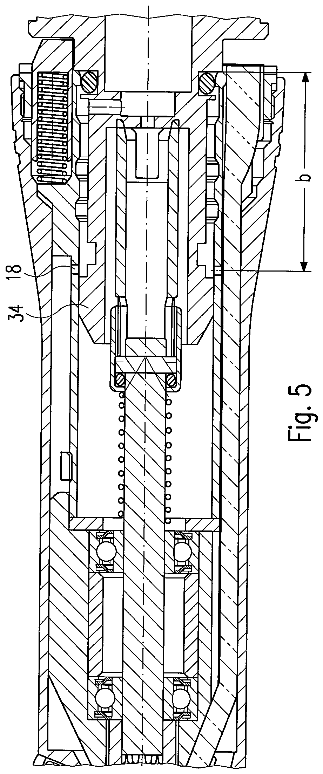

In Fig. 5 ist exemplarisch ein zweiter Anschlussbereich 34 eines zweiten Vorratsbehälters in Form einer weiteren Spraydose mit Reinigungsmittel skizziert. Der zweite Anschlussbereich 34 weist einen ersten Austrittsbereich für das zweite Medium (Reinigungsmittel) auf, der unmittelbar zu dem wenigstens einen Verbindungskanal 18 führt und einen zweiten Austrittsbereich für das zweite Medium, der unmittelbar zu dem Kraftübertragungsbereich 10 führt. Wenn also der zweite Anschlussbereich 34 wie vorgesehen in die Kupplungsaufnahme 15 gesteckt ist, so ist die Verbindung bzw. der Verbindungskanal 18 hierdurch nicht verschlossen und das zweite Medium kann aus dem zweiten Vorratsbehälter sowohl in den Kraftübertragungsbereich 10, als auch in den weiteren Hohlraum 16 einströmen, um beide genannten Räume 10, 16 zu durchspülen.

Ein beispielhaftes System zum Reinigen und Pflegen des medizinischen Handgeräts 2 ist im Sinn der obigen Beschreibung dazu ausgebildet, zum Reinigen und Pflegen des Handgeräts 2 unterschiedliche Medien durch dieses zu leiten, wobei das erste Medium lediglich durch den Kraftübertragungsbereich 10 geleitet wird, während hingegen das zweite Medium zusätzlich auch durch den weiteren Hohlraum 16 innerhalb des Handgeräts 2 geleitet wird. Das System weist also entsprechende Mittel zum Durchleiten der genannten Medien durch das Handgerät 2 auf.

Das System umfasst vorteilhaft die genannten verschiedenen Vorratsbehälter für die Medien, wobei Anschlussbereiche der Vorratsbehälter, über welche das entsprechende Medium in das Handgerät 2 geleitet wird, unterschiedlich ausgestaltet sind. Insbesondere kann das System also den oben beschriebenen ersten Vorratsbehälter für das erste Medium aufweisen, der den ersten Anschlussbereich 30 bzw. 30' aufweist, sowie den oben beschriebenen zweiten Vorratsbehälter für das zweite Medium, der den zweiten Anschlussbereich 34 aufweist.

Das System kann vorteilhaft mit dem oben beschriebenen Handgerät 2 zu einer Kombination kombiniert werden, wobei das Handgerät 2 die oben beschriebene Verbindung ermöglicht, also beispielsweise den Verbindungskanal 18 aufweist. Weiterhin kann dementsprechend das System bzw. die Kombination vorteilhaft das Motorelement 12 umfassen, dessen Kupplungselement 24 die wenigstens eine Öffnung 20 aufweist.

Beim Betreiben von chirurgischen Hand- und Winkelstücken wird gemäß dem Stand der Technik bewusst auf die Verwendung von Kühl- bzw. Sperrluft verzichtet, um eine Verkeimung des betroffenen Behandlungsbereichs mit kontaminierter Luft zu verhindern. Aber gerade bei derartigen chirurgischen Handgeräten besteht ein besonders großes Risiko eines Eindringens von Körperflüssigkeiten und auch von Kochsalzlösung. Diese Handgeräte werden also während einer Behandlung eines Patienten besonders stark verschmutzt und müssen daher mit besonders hohem Aufwand aufbereitet bzw. gereinigt und gepflegt werden.

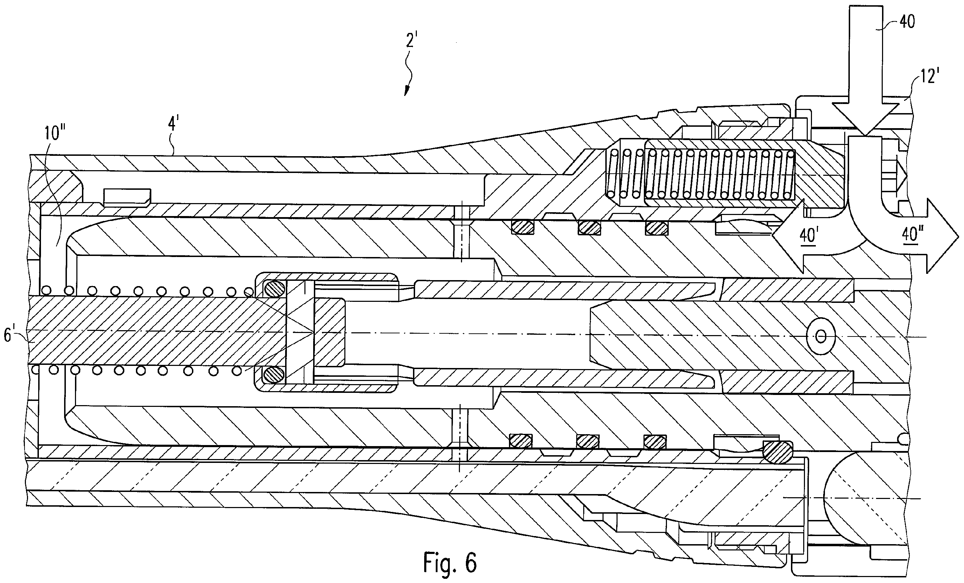

Gemäß der Erfindung wird beim Betreiben eines entsprechenden, in Fig. 6 ausschnittweise skizzierten, Handstücks 2', welches eine längliche Griffhülse 4' aufweist, in der zu einer Antriebsanordnung gehörende, insbesondere drehbar gelagerte Elemente 6' angeordnet sind, ein gasförmiges, steriles Medium durch einen Überdruck angetrieben durch einen die Elemente der Antriebsanordnung umschließenden Kraftübertragungsbereich 10" geleitet. Auf diese Weise lässt sich die Verschmutzung des Handgeräts 2' deutlich reduzieren. Bei dem Medium kann es sich insbesondere um Sperrluft handeln.

Insbesondere im Fall einer chirurgischen Anwendung kann die Leitung des Mediums während einer Operationsbehandlung durchgängig eingeschaltet sein. Dies reduziert die Verkeimung noch weiter.

Bei dem Medium handelt es sich vorzugsweise um ein antiseptisches Medium, wodurch eine weitergehende Reduzierung der Keimzahl erzielt werden kann. Vorzugsweise wird vorab ein unterer und/oder oberer Grenzwert für den Überdruck festgelegt. Der untere Grenzwert kann in Abhängigkeit einer mindestens nötig erachteten Schutzwirkung festgelegt werden. Er kann vorzugsweise zwischen 1 hPa und 10 hPa betragen, beispielsweise 5 hPa. Eine verunreinigte Flüssigkeit, die diesen Druck nicht übersteigt, kann dann nicht in das Handgerät 2' eindringen.

Der obere Grenzwert für den Überdruck kann in Abhängigkeit folgender Faktoren festgelegt werden: medizinische Gefährdung, störende Geräuschentwicklung, störendes Beströmungsgefühl des Patienten und/oder des Behandlers, insbesondere durch Kühlung bzw. Austrocknung, technische Grenze (Zuführung). Vorzugweise kann auch ein Überdruckventil für das Medium am Handgerät 2' vorgesehen sein bzw. werden, das derart ausgelegt ist, dass es im Fall eines Überschreitens des bzw. eines oberen Grenzwerts des Überdrucks öffnet. Auf diese Weise kann insbesondere eine entsprechende Beschädigung des Patienten verhindert werden.

Wie in Fig. 6 durch den Pfeil 40 angedeutet, kann zur Zuführung des Mediums in das Handgerät 2' vorgesehen sein, dass ein (separater) steriler, eventuell nur einmal verwendbarer, Schlauch im Bereich einer Kupplung eines entsprechenden Motorelements 12' aufgesteckt wird. Anschließend kann das sterile Medium, beispielsweise gefilterte Luft, zugeschaltet werden, so dass es durch den Schlauch einströmt. Weiter kann das zuvor bereits sterilisierte Handgerät 2' - bei zuströmendem Medium - aufgesteckt und in die vorgesehene Antriebsverbindung gebracht werden. Während der anschließenden Operation bleibt die Zufuhr des Mediums unter Überdruck ständig eingeschaltet, so dass keine Keime eindringen können. Da es sich bei einer Verschmutzung in diesem Fall nur noch um eine mehr oder weniger starke äußere Verschmutzung handeln kann, ist eine anschließende Aufbereitung unter deutlicher weniger Aufwand möglich.

Das an der Kupplungsstelle angeschlossene Medium bzw. die Sperrluft wird - wie durch den Pfeil 40' angedeutet - zum größten Teil nach vorne und - wie durch den Pfeil 40" angedeutet - zu einem kleineren Teil nach hinten austreten. Keime, die eventuell bei einem nicht absolut sterilen Motor vorhanden sind, werden mit dem Medium weg vom Operationsfeld getragen. Der Schlauch und das Motorelement 12' müssten dann nicht die höchsten antiseptischen Forderungen erfüllen.

Die Menge des durchströmenden Mediums kann sehr gering gehalten werden, da nur ein geringer Überdruck erforderlich ist. Die Menge kann derart gewählt werden, dass sich ein störendes Geräusch praktisch nicht oder zumindest nicht merklich entwickelt. Es kann auch vorgesehen sein, dass die Sperrluft während eines ganzen Tages dauernd das Handgerät durchströmt. Eine Verkeimung kann dann nur noch an äußeren Oberflächen stattfinden und diese kann eventuell durch einfaches Abwischen relativ keimfrei gehalten werden.

Erfindungsgemäß ist vorgesehen, dass das Medium bzw. die Sperrluft, wie weiter oben in Verbindung mit dem "zweiten Medium" beschriebenen, sowohl durch den Kraftübertragungsbereich, als auch durch den weiteren Hohlraum, besonders bevorzugt durch sämtliche Hohlräume des Handgeräts geleitet wird.

Ein entsprechendes System zum Betrieben des medizinischen, insbesondere zahnmedizinischen Handgeräts 2' weist im Sinn der obigen Beschreibung Mittel zum Leiten des gasförmigen, sterilen Mediums, durch einen Überdruck angetrieben, durch den die Elemente der Antriebsanordnung umschließenden Kraftübertragungsbereich auf. Vorzugsweise ist das System dazu ausgelegt, das Medium auch durch einen entsprechenden weiteren Hohlraum, besonders bevorzugt durch sämtliche Hohlräume des Handgeräts zu leiten. Weiterhin kann der obengenannte Schlauch bzw. ein entsprechender Schlauchanschluss, beispielsweise am Motorelement 12' vorgesehen sein.

Zu erwähnen ist weiterhin, dass die Erfindung auch vorteilhaft ist mit Bezug auf die Sauberkeit und Reinheit entsprechender Handgeräte in Verbindung mit deren Auswirkung auf die Lebensdauern von Bauteilen bzw. Strukturen der Handgeräte, die einem Verschleiß unterworfen sind, wie beispielsweise Kugellagern, Reibstellen u.s.w. Unter Nutzung einer, durch einen Partikelfilter gereinigten Luft lässt sich auf diese Weise eine Erhöhung der Lebensdauern entsprechender Bauteile bzw. Strukturen erzielen. Dies gilt insbesondere auch im Fall von zahntechnischen Geräten; da Letztere in der Praxis besonders hohen Staub-Belastungen ausgesetzt sind, ist dieser Aspekt in diesem Zusammenhang von besonderer Bedeutung.

## Patentansprüche

1. Verfahren zum Betreiben eines medizinischen, insbesondere zahnmedizinischen Handgeräts (2'), welches eine längliche Griffhülse (4') aufweist, in der zu einer Antriebsanordnung gehörende, insbesondere drehbar gelagerte Elemente (6') angeordnet sind, wobei ein gasförmiges Medium durch einen Überdruck angetrieben durch einen die Elemente der Antriebsanordnung umschließenden Kraftübertragungsbereich (10") geleitet wird, wobei das Medium zusätzlich auch durch weitere Hohlraumbereiche des Handgeräts (2') geleitet wird, die über wenigstens einen Fügespalt mit dem Außenraum (A) des Handgeräts (2') verbunden sind, **dadurch gekennzeichnet,**
**dass** das gasförmige Medium steril ist, um ein Eindringen von Keimen in das Handgerät zu verhindern.

2. Verfahren nach Anspruch 1,
bei dem das Medium antiseptisch ist.

3. Verfahren nach Anspruch 1 oder 2,
bei dem vorab ein unterer und/oder oberer Grenzwert für den Überdruck festgelegt wird.

4. Verfahren nach Anspruch 3,
bei dem der untere Grenzwert zwischen 1 hPa und 10 hPa, beispielsweise 5 hPa beträgt.

## Claims

1. Method for operating a handheld medical device (2'), in particular a handheld dental device (2'), which has an elongate gripping sleeve (4') in which elements (6') belonging to a drive arrangement, in particular rotatably mounted elements (6'), are arranged, wherein a gaseous medium, driven by an overpressure, is conveyed through a force transmission region (10") surrounding the elements of the drive arrangement, wherein the medium is in addition also conveyed through further cavity regions of the handheld device (2') which are connected to the exterior (A) of the handheld device (2') via at least one joining gap, **characterized in that** the gaseous medium is sterile in order to prevent entry of microorganisms into the handheld device.

2. Method according to Claim 1, in which the medium is antiseptic.

3. Method according to Claim 1 or 2, in which a lower and/or upper limit value for the overpressure is fixed in advance.

4. Method according to Claim 3, in which the lower limit value is between 1 hPa and 10 hPa, for example 5 hPa.

## Revendications

1. Procédé de fonctionnement d'un appareil portatif médical (2'), en particulier dentaire, lequel présente une douille de poignée allongée (4'), dans laquelle des éléments (6') appartenant à un agencement d'entraînement, logés en particulier en rotation, sont agencés,
dans lequel un milieu gazeux est conduit entraîné par une surpression par une zone de transmission de force (10") entourant les éléments de l'agencement d'entraînement,
dans lequel de plus le milieu est conduit aussi par d'autres zones de cavité de l'appareil portatif (2'), qui sont reliées à l'espace extérieur (A) de l'appareil portatif (2') par le biais d'au moins une fente de joint, **caractérisé en ce**
**que** le milieu gazeux est stérile pour empêcher une pénétration de germes dans l'appareil portatif.

2. Procédé selon la revendication 1,
dans lequel le milieu est antiseptique.

3. Procédé selon la revendication 1 ou 2,
dans lequel une valeur limite inférieure et/ou supérieure pour la surpression est fixée au préalable.

4. Procédé selon la revendication 3,
dans lequel la valeur limite inférieure est entre 1 hPa et 10 hPa, par exemple 5 hPa.
